# EUROPEAN PATENT APPLICATION

(11) **EP 4 307 236 A1**
(43) Date of publication of application: **17.01.2024**
(21) Application number: 22185006.8
(22) Date of filing: 14.07.2022
(51) Int. Cl.: G06T 19/00, G06T 7/70

(54) **METHOD AND DIGITAL PROCESSING SYSTEM FOR CREATING DIGITALLY AUGMENTED CAMERA IMAGES**

(71) Applicant: Galijasevic, Senad, 10000 Zagreb (HR)
(72) Inventor: The designation of the inventor has not yet been filed
(74) Representative: Meissner Bolte Partnerschaft mbB

(57) **Abstract**

The present invention relates to a method, preferably computer-implemented method, for creating digitally augmented camera images based on input images captured by a camera, the method comprising: providing a vignetting model for the camera; capturing at least one input image with the camera; determining augmenting areas in the input image which are to be digitally augmented; providing virtual content image data at least for the augmenting areas; and generating a digitally augmented output image by augmenting the input image with virtual content image data at least in the augmenting areas; wherein the determining of the augmenting areas and/or the providing of the virtual content image data is based on the vignetting model of the camera. The invention further relates to a corresponding digital image processing system.

## Description

The present invention relates to a method for creating digitally augmented camera images based on input images captured by a digital camera according to the subject-matter of claim 1 and a corresponding digital image processing system according to the subject-matter of claim 10.

Extended Reality is an umbrella term that covers various technologies that combine real-world camera footage captured by digital cameras with virtual content image data, such as computer-generated virtual graphics. It includes Virtual Reality, Augmented Reality, and Mixed Reality technologies. For the production of said effects, the actual camera footage needs to be combined with the rendered virtual graphics or virtual content image data. The virtual content image data needs to be rendered in the correct perspective so that the combination of actual camera footage and the virtual content image data appear consistent. To ensure the correct rendering of virtual content image data, the camera position and/or orientation need to be determined with great spatial and temporal precision.

In XR, the goal is often to combine the real camera footage with the virtual content image data in such a way that the virtual elements blend in seamlessly. This way, the audience watching the content enjoys the added virtual elements, yet feels like everything they are seeing is real. To achieve this goal, the virtual content image data must be rendered to match the real footage as closely as possible. For example, if the real-world camera uses an optical lens that distorts the captured images, then the virtual content image data should also be rendered distorted, imitating the real lens's effect in the captured images.

Virtual Reality effects have been achieved using so called green screens. These are areas covered uniformly with a specific shade of green that are placed in the background of a scene to be captured with a camera. Other colors can and have been used, but green is the most common. In the captured images, the specific shade of background color or its hue can be recognized and substituted by other video content. This allows the insertion of virtual content image data as the background to the actors and objects captured in the scene. The process involves the selection of areas of the captured images based on the prevalence of a specific color or hue present on the background screen (such as a specific tone of green in the case of green screens), which are set transparent, allowing virtual content image data to be inserted into the scene. This process is referred to as chroma keying.

A problem arising with the use of green screens and chroma keying is associated with the color based selection of the image areas that are to be substituted with virtual content image data. In a real life scenario, the green background in the camera images does not have a perfectly uniform color tone or hue, due to uneven lighting and color distortions caused by the camera itself. In light of this, it is expedient to apply a certain tolerance in the color selection for chroma keying. The degree of tolerance, however, has to be chosen carefully. If the color or hue selection is overly narrow, not all areas which are to be augmented by virtual content image data will be selected, so that green artefacts will be visible in the augmented images. An excessive tolerance in the color or hue selection may lead to an inadvertent removal of image content.

A further challenge in using green screens is to adjust the lighting so that the actual footage matches the virtual graphics. This is especially difficult when the graphics are changing over time. For example, if a light source in the virtual graphics moves while the actual real-world light source remains static, the resulting footage that combines real and virtual elements looks unnatural.

For these reasons, among others, LED walls are preferred over green screens when it comes to producing a high quality virtual studio. LED walls are digital displays consisting of large numbers of individual light emitting diodes (LEDs) arranged in a grid, i.e., a LED grid.

Extended reality technology with LED walls was recently popularized by Lucasfilm in the hit Star Wars series "The Mandalorian" and since then it has been rapidly gaining popularity, especially during the COVID-19 pandemic, which forced the movie-industry to rethink the way the movies are made and comply with safety restrictions to reduce the amount of people on set. This new XR technology is a modern day replacement for green screen studios.

A problem arising from the use of LED walls is associated with the limited dimension of LED walls. LED walls of satisfactory quality are rather expensive. Thus, budget limitations oftentimes dictate the use of smaller LED walls, which do not fill the entire background of a scene shot with a camera - in particular if the camera is positioned at a certain distance from the LED wall. In such cases, the shot images have to be augmented with virtual content image data in areas outside the LED wall, to artificially extend the LED wall graphics to areas of the camera image which are not already showing the LED wall. If the color of the virtual content image data does not closely match the colors on the LED walls, undesired artifacts will be visible in the digitally augmented camera images at the borders of the LED wall.

In light of the above, it is evident that there is still a desire for improvement of XR technology using green screens or LED walls. It is thus an object of the present invention to provide solutions for further enhancing the quality of digitally augmented camera images. In particular, it is an object of the invention to improve the realism of digitally augmented camera images and to enable a reduction of visual artefacts in digitally augmented camera images.

The above object is solved by a method for creating digitally augmented camera images according to the subject-matter of claim 1 and a digital image processing system according to the subject-matter of claim 10. Preferred embodiments of the invention are defined by the subject-matter of the dependent claims.

In particular, the problem is solved by a method, preferably a computer-implemented method, for creating digitally augmented camera images based on input images captured by a camera, the method comprising:
a) providing a vignetting model for the camera;
b) capturing at least one input image with the camera;
c) determining augmenting areas in the input image which are to be digitally augmented;
d) providing virtual content image data (at least) for the augmenting areas; and
e) generating a digitally augmented output image by augmenting the input image with virtual content image data at least in the augmenting areas;
wherein the determining of the augmenting areas and/or the providing of the virtual content image data is based on the vignetting model of the camera.

The invention is based on the surprising finding that the quality of digitally augmented camera images can be markedly improved when the vignetting effect of the camera used to capture the images to be augmented is taken into consideration during image processing.

The quality improvement of digitally augmented camera images can be achieved in application scenarios in which the digital augmentation is used to replace image areas depicting a background element such as a green screen. In such application scenarios, the vignetting model can be used in the context of the determination of the augmenting areas. By using the vignetting model during the determining of the augmenting areas, the accuracy of the augmenting area determination is improved. This aspect of the invention is particularly useful when used in the context of chroma keying. The term "background element" designates an element which can be used to identify augmenting areas in input images by means of chroma keying, such as green screens, but is not limited to green screens. Blue screens and other background elements that can be used to identify augmenting areas in an input image are encompassed by the term "background element" as well.

Another context in which the present invention yields a remarkable improvement of digitally augmented images is a setting in which the input images contain a LED wall that does not fill the entire image background. The determination of the augmenting areas in such cases is comparatively straightforward - any area of the input image that neither depicts the LED wall nor a foreground object such as a person may be determined as augmenting area. The imagery displayed on the LED wall may then be augmented by overlaying corresponding virtual content image data in the augmenting areas. Thus, the imagery shown on the LED wall and captured in the input image is virtually extended or augmented with virtual content image data.

The problem which arises in this scenario and which is solved by the present invention is that it is difficult to ensure a seamless transition between the input image areas in which the LED wall is captured and the virtual content image data. Surprisingly, it has been found that when the virtual content image data is modified based on a vignetting model of the camera, transition errors between the areas of interest and the digitally augmented image areas with virtual content image data can be considerably reduced.

Since the image content on the LED wall, which is captured in the input images, is subjected to imaging aberrations and errors of the camera, the quality of digitally augmented camera images can be greatly improved if the virtual content image data is modified based on a vignetting model of the camera (and, thus, virtually subjected to the same imaging error as the data in the input image). In this scenario, it is preferred that the vignetting model is used to apply a vignetting effect to the virtual content image data, such that the virtual content image data is subjected to the same vignetting effect as the remaining content of the input image that has been captured by the camera and is not replaced by virtual content image data.

Vignetting refers to the reduction of an image's brightness or saturation towards the periphery, which occurs in all lenses and lens systems used in cameras. The vignetting effect may vary with the type of lens used, and may furthermore be dependent on various camera settings such as aperture. The image effect caused by vignetting, i.e. the vignetting effect, is characterized by a brightness reduction in areas of the image that are at a distance from the center, yielding a darker border at the periphery of the image.

In order to enable a consideration of the vignetting effect in the creation of digitally augmented images, the present invention makes use of a vignetting model. The vignetting model is a function that, for a given 2D point coordinate in an image, outputs the reduction in brightness or saturation for this specific image 2D point coordinate relative to the center of the image. The vignetting model may be constituted by a radial function indicating the reduction in brightness or saturation in dependence of the (radial) distance from the image center. Alternatively, the vignetting model may be provided as a lookup table in which the reduction in brightness or saturation is provided for each pixel of the image frame. The reduction in brightness or saturation may, for example, be indicated by a number between 0 and 1, with 0 indicating a full brightness or saturation reduction to zero, and 1 indicating no brightness or saturation reduction (which may be the case for the center of the image frame, for example).

It is preferable that the vignetting model is dependent on the aperture size of the camera. The smaller the aperture of the camera, the less pronounced the vignetting effect will be. It is therefore preferable that the vignetting model comprises a set of a plurality of sub-models for different aperture sizes of the camera.

In the context of the present invention, the camera is preferably configured as a digital camera, that is equipped with an image sensor to capture images in digital memory. This allows for an image augmentation in real time. However, the present invention is also feasible with an analog camera, for which the captured images are digitalized. In the context of the present invention, the term "camera" thus designates any camera system that is suitable to provide digital input images that can be augmented with digital image content.

The input image captured by the (digital) camera is provided as digital image, that is usually composed of pixels, each with finite, discrete quantities of numeric representation for its intensity or gray level per pixel. These quantities are usually output as spatial coordinates denoted with x, y on the x-axis and y-axis, respectively. The 2D area that is spanned by the spatial coordinates representing the input images is also referred to as image frame in the context of this disclosure.

In the context of the present invention, two basic types of image content are to be distinguished in the input image. The input image contains areas that depict an object or scene of interest, such as a person standing before a green screen, or persons and objects in front of a LED wall (in which case both the persons and objects, as well as the image depiction of the LED wall may belong to the areas of interest). These areas in the input image will also be referred to as regions of interest in the following. Besides these regions of interest, the input images further contain augmenting areas. These areas are to be replaced by image information not contained in the input image. In the case of a green screen, the augmenting areas essentially correspond to the green areas of the input image, which depict the green screen. In the case of a LED wall scene, the augmenting areas comprise the areas outside the LED wall in which neither a LED wall nor persons or objects of interest are visible in the input image.

The input images are modified by augmenting the input image with virtual content image data at least in the augmenting areas. The virtual content image data is not particularly limited. In the case of a green screen application scenario, the virtual content image data may contain background imagery such as a scenery in which the persons before the green screen appear to be located. It can also comprise information with which the input images are to be augmented, such as a map for weather forecasting or text information. In the case of LED walls, the virtual content image data may be image data that complements the image data displayed on the LED wall, so that the imagery displayed on the LED wall is virtually extended beyond the borders of the LED wall.

The combination of the virtual content image data (at least in the augmenting areas) with the image data contained in regions of interest yields the digitally augmented output image. Different methods for combining the virtual content image data with other image information in the input image can be used and are known in the art. For example, after determination of the augmenting areas, the corresponding pixels of the input image can be set transparent. The modified input image thus obtained can then be overlaid with an image containing the virtual content image data. In order to smoothen the transition between the virtual content image data in the augmenting areas and the input image information in the regions of interest, the virtual content image data may be provided to partially overlap with the regions of interest, and the overlapping areas may be overlaid with a transparency gradient.

The method for creating digitally augmented camera images according to the invention is preferably computer-implemented. The method can be carried out on a dedicated computer to which (an) input image(s) captured by the camera are provided. Alternatively, the method may be implemented on a microcomputer that is contained in the camera or in a separate device.

It should be noted that the method is not strictly limited to the above-identified order of the steps. The steps may partially be performed simultaneously. Step d) may be performed before or simultaneously with any of steps a) to c).

The providing of virtual content image data can be achieved by receiving pre-compiled virtual content image data from a data source, and/or by creating or rendering virtual content image data. Providing virtual content image data based on the vignetting model may comprise applying a vignetting effect to the virtual content image data that is based on or derived from the vignetting model.

According to a preferred embodiment, the step of determining the augmenting areas in the input image comprises correcting the input image based on the vignetting model. Preferably, determining the augmenting areas in the input image comprises chroma keying. Further preferably, the step of correcting the input image based on the vignetting model is carried out before determining the augmenting areas in the input image.

This embodiment of the invention is particularly advantageous if the selection of the augmenting areas is performed based on image information in the input images that is distorted by the vignetting effect. A prominent example is chroma keying, where the augmenting areas in an input image are determined based on a given color and/or hue. The vignetting effect leads to a darkening of areas in the periphery of the input image. In order to ensure a correct consideration of these areas in chroma keying, the selection tolerance has to be increased in order to account for the changes in color and/or hue that are induced by the vignetting effect. If the vignetting effect in the input images is corrected and/or compensated before chroma keying based on the vignetting model, the color and/or hue in areas in the periphery of the image, in which the vignetting effect is most prominent, can be corrected before keying. This allows a reduction in the selection tolerance during chroma keying. Surprisingly, it has been found that a correction of the vignetting effect in input images based on a vignetting model of the camera yields a drastic improvement in quality of subsequently digitally augmented camera images, because the precision of chroma keying can be markedly improved. This leads to significant reduction of visual artefacts in the digitally augmented camera images.

It is particularly preferable that determining the augmenting areas comprises
- providing a 3D model of a background element such as a green screen that is captured in the input image;
- capturing a plurality of reference images of the background element with the camera from a plurality of camera positons and/or camera poses;
- correcting the reference images based on the vignetting model to obtain devignetted reference images;
- assigning color information of the devignetted reference images to the 3D model of the background element to obtain a 3D reference model of the background element;
- determining areas in the input image in which the background element is captured as augmenting areas based on a comparison of the input image to the 3D reference model of the background element.

In order to improve the sensitivity and selectivity of the chroma keying process for selecting areas in the input image as augmenting areas in which the green screen is visible, it is preferable that, instead of defining a theoretical color and/or hue value for the chroma keying process, the color information required for the chroma keying process is derived from actual camera images. Color distortions caused by the optics of the camera, and/or the image sensor are thus directly taken into account. In this context, it may further be advantageous to provide a 3D model of the background element that defines the augmenting areas in the input images (e.g., the green screen), and to use reference images of the background element captured by the camera to create color information that is assigned to the 3D model of the background element. If the color and/or hue of the background element is not perfectly uniform, due to, e.g., non-uniform lighting or contamination of the background element, such irregularities can be taken into account by constructing a 3D model and assigning color information obtained from actual camera images to the 3D model.

One problem associated with this approach is that the color and/or hue of a region of the background image will vary with the position of the region in the reference images. If, for example, a corner of the background element is captured in the center region of a first reference image, the corner may appear brighter than in a second reference image in which the corner is captured in the periphery, due to the vignetting effect. If the color information obtained from the first reference image is assigned to the 3D model of the corner of the background element, and an input image contains the corner in a peripheral region (or vice versa), the use of the color information in the 3D model for chroma keying may yield a result of inferior quality, due to the deviation in color and/or hue between the 3D model and the input image.

For this reason, it is preferred that the reference images are corrected based on the vignetting model, in order to improve the accuracy of the color information that is assigned to the 3D model of the background element and ultimately used for chroma keying to determine the augmenting areas in the input image. In this context, it is further preferred that the input image is also corrected based on the vignetting model before performing chroma keying. This leads to a further enhancement in the quality of the augmented images. Alternatively, when the position and orientation of the camera relative to the background element is known, the 3D reference model of the background element can be used to create a virtual input image corresponding to the (real) input image captured by the camera. A vignetting effect based on the vignetting model is applied to the virtual input image, and the modified virtual input image thus obtained is compared to the (real) input image to determine the augmenting areas in the input image.

Color information can be provided in the form of RGB, YUV or CYMK values, or any other format that is suitable to identify a color and/or hue of a background element such as a green screen for chroma keying.

The 3D (reference) model of the background element preferably contains 3D (Cartesian) coordinates of at least some delimiting features of the background element. If the background element is constituted by a rectangular screen, for example, the 3D (reference) model may contain at least the (Cartesian) coordinates of the corners of the screen.

It is preferred that the position and pose of the camera are determined when capturing an input image containing the background element. This allows a determination of the viewpoint of the camera relative to the 3D (reference) model of the background element. With this information, the part of the 3D (reference) model of the background element that corresponds to the area captured in the input image can be determined and used in the further processing of the input image, in particular in chroma keying. In order to determine the position and pose of the camera, a camera tracking system may be employed. Suitable camera tracking systems include systems based on odometry, GPS or optical tracking methods such as SLAM. An optical tracking system suitable for determining the position and pose of a camera is described, for example, in EP 3 985 609 A1.

The position of the camera designates an absolute 3D position of the camera in space. The pose of the camera designates a combination of the camera's position and an orientation of the camera, which may be described by a vector parallel to the optical axis of the camera and pointing in the direction of the camera's field of view.

According to a further preferred embodiment, the vignetting model is used in the step of creating virtual content image data by applying a vignetting effect to the virtual content image data based on the vignetting model. The step of creating the virtual content image data is thus based on the vignetting model in the sense that the vignetting model is used to apply a vignetting effect to the virtual content image data.

This embodiment is particularly useful for the digital augmentation of input images in which a scene with a LED wall is captured, particularly when the LED wall does not fill the background of the entire input image. Areas in the input image which do not contain the LED wall (and which do not contain any other objects of interest such as persons positioned in front of the LED wall) may be determined as augmenting areas, in order to virtually extend the scene shown on the LED wall with virtual content image data. Since the LED wall captured in the input images is subjected to the vignetting effect of the camera, the application of a vignetting effect to the virtual content image data which is based on the vignetting model of the camera ensures that the brightness and/or saturation of the virtual image content data in the augmenting areas of the output image matches that of the remaining image areas, so that no hard transitions between virtual image content data and other areas of the image are visible in the output image.

Herein, it is preferable that the determining of the augmenting areas comprises
- providing a 3D model of an object of interest that is captured in the input image;
- establishing a position and pose of the camera;
- calculating the image position of the object of interest in the input image based on the 3D model of the object of interest and the established position and pose of the camera;
- determining the augmenting areas based on the image position of the object of interest in the input image.

The object of interest is preferably a stationary object in the vicinity of the camera and can, for example, be constituted by one or more LED walls. Areas of the input image that do not depict the object of interest can be determined with high reliability, accuracy and speed if a 3D model of the object of interest is provided. The camera position and pose during the capture of an input image is established, and the position of the object of interest in the input image can be calculated based on the 3D model of the object of interest and the position and pose of the camera.

The 3D model of the object of interest preferably contains 3D (Cartesian) coordinates of at least some delimiting features of the object of interest. If the object of interest is constituted by a rectangular screen such as a LED wall, for example, the 3D model may contain at least the (Cartesian) coordinates of the corners of the screen.

The position and pose of the camera can be determined with any suitable tracking means as described above. In a further preferred embodiment, the virtual content image data is subjected to a lens distortion effect that corresponds to the lens distortion effected by the camera before generating the digitally augmented output image. This further enhances the quality of the digitally augmented output image.

In a further embodiment, the vignetting model is used in the step of creating virtual content image data by
- applying a devignetting effect based on the vignetting model to the input image, preferably at least to areas of the input image that are outside the augmenting areas, and
- combine the virtual content image data with the devignetted input image, preferably with areas of the input image that are outside the augmenting areas and to which the devignetting effect has been applied.

This embodiment also allows for an improvement in image quality of digitally augmented camera images, because abrupt transitions between input image data (which has been subjected to vignetting due to the fact that the image data is capturesd with a camera) and virtual content image data are mitigated or elminiated by devignetting the image data in the input image.

According to a preferred embodiment, the vignetting model comprises a function mapping a vignetting value indicative of a reduction in brightness and/or saturation due to the vignetting effect of the camera to each pixel position of an image frame of the camera. The mapping can be provided in a lookup table, in which a value indicative of the reduction in brightness and/or saturation is given for each pixel of the image frame of the camera. This allows for a conceptually simple and computationally easily accessible provision of the vignetting model.

The values of the vignetting model, that are indicative of a reduction in brightness and/or saturation due to the vignetting effect of the camera, may be provided as numeric values on a predetermined scale. For example, a numeric value of zero in the vignetting model may indicate that the corresponding pixel is completely obscured by the vignetting effect and always yields a zero brightness, i.e. is completely black. The numeric values may furthermore be normalized. For example, a value of 1 in the vignetting model may indicate that the corresponding pixel is not reduced in brightness and/or saturation by the vignetting effect at all, or is a pixel experiencing the least reduction in brightness relative to the other pixels of the input image frame.

When using values between 0 and 1 for the vignetting model, the applicability of the vignetting model is facilitated. The vignetting model can, for example, be used to apply a vignetting effect to image data, in particular virtual content image data, by multiplying the brightness and/or saturation value of a pixel in question with the corresponding value of the vignetting model. Conversely, image data, in particular input image data, can be devignetted by dividing the brightness and/or saturation value of a pixel in question by the corresponding value of the vignetting model.

According to a further embodiment, the vignetting model comprises a function mapping a vignetting value indicative of a reduction in brightness and/or saturation due to the vignetting effect of the camera to a distance relative to a center of an image frame of the camera. This vignetting model requires less storage space than a pixel based vignetting model, but still allows for a good reproducibility of the vignetting effect of the camera. As with the previous embodiment, the vignetting values may be provided as numeric values on a predetermined scale, which may furthermore be normalized. Preferably, values between 0 and 1 are used for the vignetting values.

When using this type of vignetting model for the modification of image data, a distance between a pixel coordinate to be modified and the image center is calculated, in order to obtain the corresponding vignetting value. It may be preferable to use the geometric center of the image frame as image center. If the image frame has a resolution of W x H pixels in x and y direction, respectively, the image center may be determined as (W/2; H/2). Alternatively, the image center may be offset with regard to the geometric center of the image frame, to account for an asymmetric or off-axis alignment of the lens system of the camera. In this case, it is preferable that the center of the image frame of the camera comprises an offset value indicating an offset between the geometrical center of the image frame of the camera and a center of the vignetting model at which the vignetting value has a minimum or maximum value. The offset value is preferably constituted by a 2D vector indicating the offset in x and y direction in the image frame.

The object of the present invention is furthermore solved by a digital image processing system for creating digitally augmented camera images based on input images captured by a camera, preferably by using a method as described above, the digital processing system comprising:
- a processing unit that is configured to
   ∘ receive an input image from a camera;
   ∘ determine augmenting areas in the input image which are to be digitally augmented;
   ∘ provide virtual content image data (at least) for the augmenting areas; and
   ∘ generate a digitally augmented output image by augmenting the input image with virtual content image data at least in the augmenting areas;
   and
- a modelling unit that is configured to
   ∘ store a vignetting model of the camera; and
   ∘ provide the vignetting model to the processing unit;
wherein the processing unit is configured to determine the augmenting areas and/or provide the virtual content image data based on the vignetting model of the camera.

The technical advantages achieved with the digital image processing system of the present invention correspond to those achieved with the method for creating digitally augmented camera images described above. Aspects, features and advantages described in the context of the inventive method are also applicable to the inventive image processing system, and vice versa. In particular, any task that the processing unit or modelling unit of the inventive image processing system is configured to perform can be carried out as a method step in the inventive method, and vice versa. Preferably, the inventive method is performed using an inventive image processing system as described above.

The processing unit and the modelling unit can be implemented as physically separate entities, or can be implemented as software and storage modules that are contained and executed in a common computing unit.

According to a preferred embodiment, the processing unit is configured to correct the input image based on the vignetting model when determining the augmenting areas in the input image.

It is further preferred that the processing unit is configured to use chroma keying when determining the augmenting areas in the input image, and is preferably configured to correct the input image based on the vignetting model before determining the augmenting areas in the input image.

Further preferably, the processing unit is configured to
- provide a 3D model of a background element such as a green screen that is captured in the input image;
- receive a plurality of reference images of the background element captured the camera from a plurality of camera positions and/or camera poses;
- correct the reference images based on the vignetting model to obtain devignetted reference images;
- assign color information of the devignetted reference images to the 3D model of the background element to obtain a 3D reference model of the background element;
- compare the corrected input image to the 3D reference model of the background element in order to determine areas in the input image in which the background element is captured as augmenting areas.

According to a further preferred embodiment, the processing unit is configured to use the vignetting model for creating virtual content image data by applying a vignetting effect to the virtual content image data based on the vignetting model.

Further preferably, the processing unit is configured to
- provide a 3D model of an object of interest that is captured in the input image;
- establish a position and pose of the camera;
- calculate the image position of the object of interest in the input image based on the 3D model of the object of interest and the established position and pose of the camera;
- determine the augmenting areas based on the image position of the object of interest in the input image.

The object of the invention is further solved by a computer-readable medium containing instructions that, when executed by at least one processor, cause the at least one processor to perform a computer-implemented method comprising steps in accordance with the inventive method described above. The technical advantages achieved with the method of the present invention correspond to those achieved with the computer-implemented method and corresponding computer-readable medium. Aspects, features and advantages described in the context of the inventive method are also applicable to the inventive computer-implemented method and computer-readable medium.

The above and further features and advantages of the present invention will become more readily apparent from the following detailed description of preferred embodiments of the invention with reference to the accompanying drawings, in which:
- Fig. 1: is a schematic illustration of a camera with a digital image processing system in accordance with an embodiment of the present invention that is used to capture a scene with a person and a LED wall;
- Fig. 2: is a schematic illustration of an input image captured in the setting of Fig. 1 that contains regions of interest and augmenting areas;
- Fig. 3: is a schematic illustration of a camera with a digital image processing system in accordance with an embodiment of the present invention that is used to capture a scene with two persons and a green screen;
- Fig. 4: is a schematic illustration of an input image captured with the camera in Fig. 3 that contains regions of interest and augmenting areas;
- Fig. 5: is a schematic illustration of the vignetting effect in an image frame;
- Fig. 6: indicates the radial coordinates used in the vignetting model of a preferred embodiment of the invention;
- Fig. 7: is a schematic illustration of a setup for creating a vignetting model for a camera;
- Fig. 8a-d: are schematic illustrations of images captured during the creation of a vignetting model;
- Fig. 9: is a schematic illustration of an image frame with image positions of a visual reference target for creating a vignetting model.

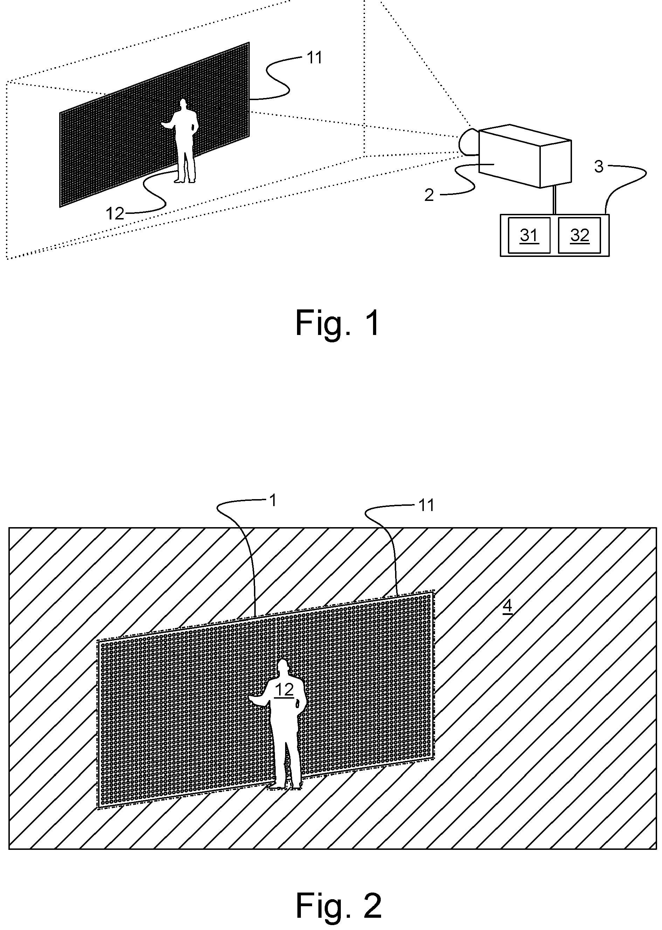

Fig. 1 shows a schematic illustration of a scenario in which the method for creating digitally augmented camera images and the digital image processing system according to the present invention may be used.

Fig. 1 shows an image processing system 3 in accordance with an embodiment of the present invention. The image processing system 3 comprises a processing unit 31 and a modelling unit 32, which will be described in greater detail below.

The image processing system 3 is connected to a camera 2. It can be constituted by a separate unit or be comprised in the electronic components of the camera 2. The camera 2 is provided to shoot a scenery containing a LED wall 11. The LED wall 11 constitutes an object of interest, which will be contained in images captured by the camera 2 and which is intended to be maintained, at least in great parts, in the camera images after the image processing performed by the image processing system 3. In front of the LED wall 11, further objects of interest may be located, such as a person 12.

The camera 2 may be a photo camera for shooting still images or, more preferably, a movie camera for capturing movie sequences constituted by a plurality of sequential images. The area that is captured by the camera 2 is indicated in Fig. 1 by dotted lines.

The scenario depicted in Fig. 1 may be encountered when shooting a movie scene, in which the person 12 acts before the LED wall 11 which displays a scene background, or in a television production studio, where the person 12 is an anchorman presenting news or weather forecasts in front of the LED wall 11 which displays additional information such as a weather map or a virtual studio background.

Fig. 2 is a schematic illustration of an image captured by the camera 2 in the setting depicted in Fig. 1. The area captured by the camera 2, that is indicated by dotted lines in Fig. 1, is contained in an image frame of the camera 2 and yields an input image as schematically illustrated in Fig. 2. The input image is preferably provided as a pixel-based, digital image. In the input image, the LED wall 11 and the person 12 in front of it are visible. Both the LED wall 11 and the person 12 constitute objects of interest that are to be maintained, at least in great parts, in the input image after a digital processing. The entirety of the input image area covered by the objects of interest may be referred to as a region of interest 1 and is delimited in Fig. 1 by a dash-dotted line.

Fig. 2 shows a scenario in which a part of the person 12 (its feet) are not comprised in the area of the input image delimited b the LED wall 11. This part may be omitted from the region of interest 1 for the sake of simplicity. Alternatively, the part may be automatically determined, for example by a suitable AI algorithm, and be included in the region of interest 1 as shown in Fig. 2.

The input image of Fig. 2 further contains areas that do not depict any object of interest such as the LED wall 11 or the actor 12, i.e. areas outside the region of interest 1. These areas, which are cross-hatched in Fig. 2, may be designated as augmenting area(s) 4. The augmenting area(s) is/are to be augmented with virtual image content that is not visible in the input image of Fig. 2. For the sake of clarity, the entirety of augmenting areas 4 in the input image(s) is referred to as augmenting area 4.

In the case of a movie scene, the augmenting area 4 may be augmented with scenic imagery complementing the scenery displayed on the LED wall 11. In the case of a television production studio, it may be desirable to display virtual studio content in the augmenting area 4.

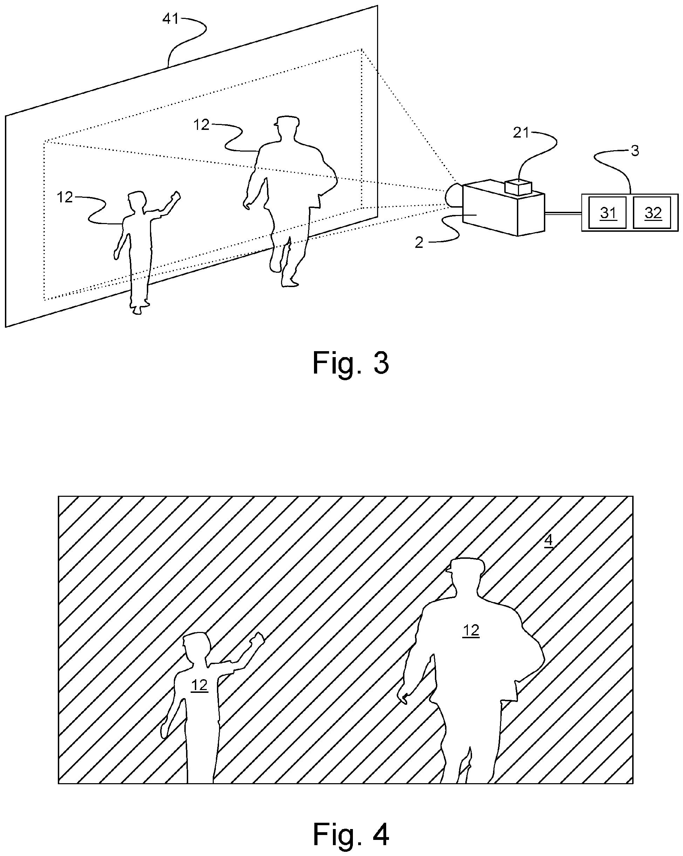

Fig. 3 shows a further application scenario for the present invention. Like, Fig. 1, the camera 2 with the image processing system 3 is provided. In the scenario of Fig. 3, the camera 2 is used to capture a scene with two persons 12 that are located in front of a background object 41. The background object 41 may be constituted by a green screen. Fig. 4 depicts an input image shot by the camera 2 in Fig. 3. The input image contains depictions of the two persons 12 in front of the background element 41. The persons 12 constitute the regions of interest 1 in the input image. The area covered by the background element 41 constitutes the augmenting area 4 of the input image. This augmenting area 4 may be overlaid with virtual content image data, in order to replace the (usually uniform) background provided by the background object 41 with a desired background such as a movie scenery or a virtual studio background.

The digital image processing system 3 shown in Fig. 1 and 3 contains a processing unit 31 that is configured to receive the input image shown in Fig. 2 or 4 from the camera 2. The processing unit 31 is further configured to determine the augmenting areas 4 in the input images. Furthermore, the processing unit 31 is configured to receive virtual content image data that is to be contained in the digitally augmented output image at least in the augmenting areas 4. The virtual content image data may be provided from an external source such as a computer system. It may also be generated in the processing unit 31 or the modelling unit 32, or another component of the image processing system 3. The processing unit 31 is configured to generate a digitally augmented output image by augmenting the input image with virtual content image data at least in the augmenting areas 4.

In a conventional image processing method, augmenting areas 4 such as the ones shown in the input images of Fig. 2 and 4 are identified and subsequently overlaid with virtual content image data at least in the augmenting areas 4 to generate a digitally augmented output image. The present invention yields an improvement over conventional image processing methods by taking into account the vignetting effect of the camera 2 in the image processing process, in order to yield a digitally augmented output image with improved quality.

The vignetting effect of the camera 2 is taken into account in the context of the present invention by provision of a vignetting model that models the vignetting effect of the camera 2. This allows for a correction of the vignetting effect in (input) images captured by the camera 2 in order to obtain devignetted camera images, and/or for an application of the vignetting effect to virtual content image data. This will be explained in greater detail below.

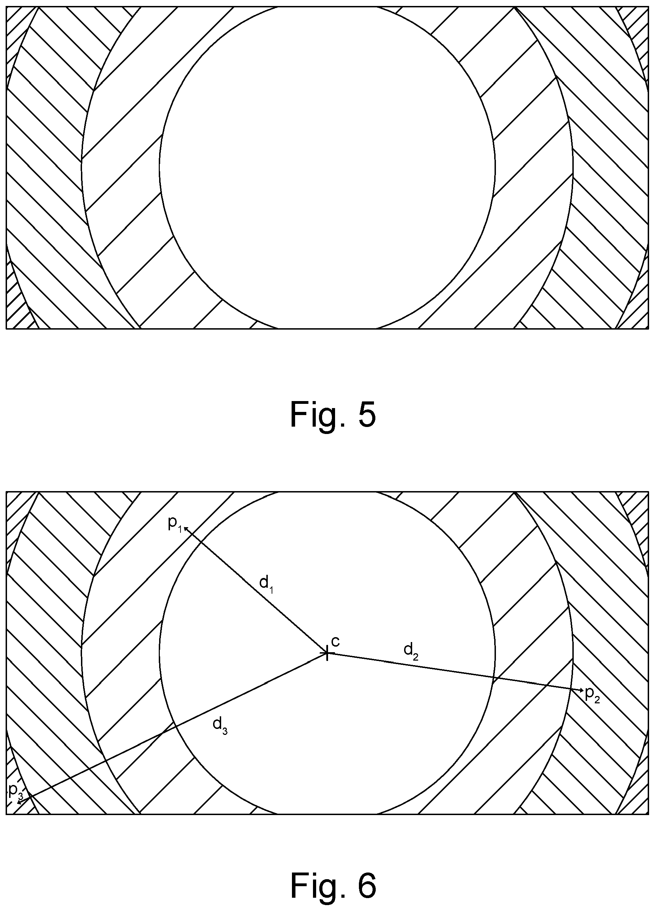

The vignetting model is stored in the modelling unit 32. It quantifies the reduction in brightness and/or saturation for each position in the image frame. The vignetting model of the camera 2 is configured to quantify a brightness and/or saturation reduction at each position in the image frame of the camera 2 which is effected by the camera 2, in particular the limited aperture of its lens system. A typical vignetting effect encountered in a camera 2 with a lens system is schematically depicted in Fig. 5. An area around the image frame center, up to a certain radial distance, may not exhibit any noticeable vignetting, whilst areas at the periphery of the image frame are increasingly reduced in brightness and/or saturation, as indicated by an increased hatching density in Fig. 5. It is noted that lens systems of cameras may also give rise to vignetting effects in which areas with a stronger vignetting effect are located at the center of the image frame, and the vignetting effect is reduced with increasing distance from the image center.

The vignetting model can be configured by a lookup table, in which a vignetting value, which quantifies the brightness and/or saturation reduction, is contained for each pixel of the image frame. In order to determine the vignetting value for a position in the image frame of the camera 2, the corresponding pixel coordinate is identified in the lookup table and the corresponding vignetting value is retrieved.

Alternatively, the vignetting model can be provided as a (scalar) function that indicates the vignetting value as a function of (radial) distance d from an image center c of the image frame. Fig. 6 schematically illustrates such a vignetting model. The image center c is depicted, along with three exemplary image (frame) positions p₁, p₂, p₃. In order to determine the vignetting value for the image frame positions p₁, p₂, p₃, the respective distance d₁, d₂, d₃ to the image frame center c is determined and the corresponding vignetting value is determined from the scalar function contained in the vignetting model. The image position p₁ has the smallest distance d₁ to the center c and thus exhibits the lowest vignetting effect. The highest vignetting effect is obtained for image position p₃ which lies in the left bottom corner of the image frame and has the highest distance d₃ to the image center c.

The vignetting model may be constituted by a linear function, a polynomial function of order n or any other function that is suitable to model the vignetting effect of the camera 2. An asymmetric alignment of the lens system of the camera 2 relative to the image sensor can be accounted for by an offset of the image frame center c that can be provided in the vignetting model.

The vignetting values are preferably numerical values in the interval [0;1], with 0 indicating a complete obscuration of the corresponding image position, and 1 indicating no brightness reduction at all (or the least brightness reduction relative to other image positions).

The vignetting model stored in the modelling unit 32 can be used in various ways to improve the quality of the digitally augmented output images.

In the scenario shown in Fig. 1 and 2, the determination of the augmenting area 4 is comparatively simple. In this scenario, it is preferable to use the vignetting model to modify the virtual content image data in order to reduce visual artefacts in the digitally augmented output image.

In order to provide a digitally augmented output image of high quality, it has to be ensured that the virtual content image data matches the image data in the region of interest 1 of the input image in brightness and/or saturation. If the brightness and/or saturation of the virtual content image data differs from that of the image data in the region of interest 1 in the input image, a visible seam will be obtained in the border areas between the region of interest 1 and the augmenting area 4.

Due to the vignetting effect of the camera 2, noticeable discontinuities in brightness and/or saturation may be encountered when augmenting the input image of Fig. 2 with virtual content image data in the augmenting area 4 without properly taking the vignetting effect of the camera 2 into account. The image data contained in the input image is obviously subjected to the vignetting effect of the camera 2 due to the fact that the input image is captured with the camera 2.

In order to allow for a seamless complement of the input image with virtual content image data, the processing unit 31 is configured to receive the vignetting model from the modelling unit 32. The processing unit 31 is configured to create the virtual content image data for augmentation of the input image by applying a vignetting effect based on the vignetting model to the virtual content image data. Herein, the designated position of each pixel of the virtual content image data in the image frame may be determined, and the brightness and/or saturation value of each pixel of the virtual content image data may be modified based on the vignetting model. If a vignetting model with vignetting values between 0 and 1 is used, as detailed above, the modification based on the vignetting model may comprise a multiplication of the brightness and/or saturation value of each pixel of the virtual content image data with the corresponding vignetting value.

Through application of a vignetting effect to the virtual content image data that is based on the vignetting model of the camera 2, the virtual content image data is modified in the same way as if being captured by the camera 2. A subsequent augmentation of the input image with the modified virtual content image data yields a digitally augmented output image with enhanced quality, since visual artefacts at the border between the region of interest 1 and the augmenting area 4 are suppressed.

In the scenario depicted in Fig. 3 and 4, the vignetting model of the camera 2 may be used in an alternative or additional processing step in order to enhance the quality of the digitally augmented output image. The main challenge in the scenario of Fig. 3 and 4 lies in a reliable determination of the augmenting area 4. With the region of interest 1 being composed of movable objects such as the persons 12 in Fig. 3 and 4, the augmenting area 4 has to be determined dynamically for each input image. In the case of Fig. 3 and 4, the background element 41 has a substantially uniform color. Therefore, chroma keying is used to determine the augmenting area 4 in the input images.

In order to improve the reliability and accuracy of the chroma keying process, color artifacts produced by the camera 2 in the input images need to be minimized. For this reason, the vignetting model is used in the determining of the augmenting areas 4. Specifically, the input images are corrected based on the vignetting model. In other words, the input images are corrected by performing devignetting based on the vignetting model. If a vignetting model with vignetting values between 0 and 1 is used, as detailed above, the correction may comprise a multiplication of the brightness and/or saturation value of each pixel of the input image with the inverse of the corresponding vignetting value.

The vignetting model can be used for a further improvement in a chroma keying setting. For this additional improvement, it is preferred that the camera 2 comprises a tracking system 21 as shown in Fig. 3, that is configured to establish a position and pose of the camera 2 during image capturing. Furthermore, a 3D model of the background element 41 is provided and, for example, stored in the modelling unit 32.

The 3D model of the background element 41 is used to create a virtual reference of the background element 41 to be used for chroma keying. For this, the camera 2 is used to capture a plurality of reference images of the background element 41 at a plurality of positions and/or orientations of the camera 2. For each reference image, the position and pose of the camera 2 is determined with the tracking system 21. The position and orientation of the camera 2 relative to the background element 41 is determined based on the 3D model of the background element 41 and the position and orientation of the camera 2 established with the tracking system 21. The 3D model of the background element 41 is then complemented with color information by assigning color values captured in the reference images to corresponding positions in the 3D model of the background element 41, in order to obtain a 3D reference model of the background element 41.

In order to improve the accuracy of the color information in the 3D model the reference images are devignetted before assigning color information to the 3D model. The devignetting of the reference images may be carried out in the same manner as the devignetting of the input images described above. By devignetting the reference images before assigning color information to the 3D model of the background object 41, the accuracy of the color information in the 3D model is considerably improved.

The 3D reference model of the background element 41 thus obtained can be used for an improved chroma keying process. For each input image, the corresponding position and orientation of the camera 2 is established. In combination with the 3D reference model of the background element 41, the part of the background element 41 that is captured in the input image can be determined. The input image may additionally be devignetted. Chroma keying is then performed by comparing the (preferably devignetted) input image with the corresponding part of the 3D reference model of the background object 41.

As an alternative approach, it is also possible to use the vignetting model in a different way to improve the chroma keying accuracy. When capturing an input image with the camera 2, the position and pose of the camera 2 is determined (with the tracking system 21). The position and orientation of the camera 2 relative to the background element 41 is determined based on the 3D model of the background element 41 and the position and orientation of the camera 2 established with the tracking system 21. The 3D reference model, together with the information on relative position and orientation of the camera 2 and the 3D model of the background element 41, is used to create a virtual input image of the background element 41 which contains the part of the background element 41 that is captured in the real input image. The virtual input image is then modified by applying a vignetting effect to the virtual input image based on the vignetting model of the camera. This modified virtual input image is then used as a reference for chroma keying of the (unamended) input image.

The tracking system 21 described for use in the scenario of Fig. 3 and 4 may also be optionally used in the scenario of Fig. 1 and 2 for an improved determination of the augmenting areas 4. In this case, a 3D model of the object of interest 1 in Fig. 1 is provided in the image processing system. When capturing an input image, the corresponding position and orientation of the camera 2 is established with the tracking system 21. This allows to calculate the image position of the object of interest 1 in the input image shown in Fig. 2 based on the 3D model of the object of interest 1 and the established position and orientation of the camera 2. The augmenting area 4 may then be determined based on the calculated image position of the object of interest 1 in the input image.

It is preferable that the vignetting model accounts for different aperture sizes of the camera 2. For this, the vignetting model preferably comprises a plurality of vignetting models for different aperture sizes of the camera 2.

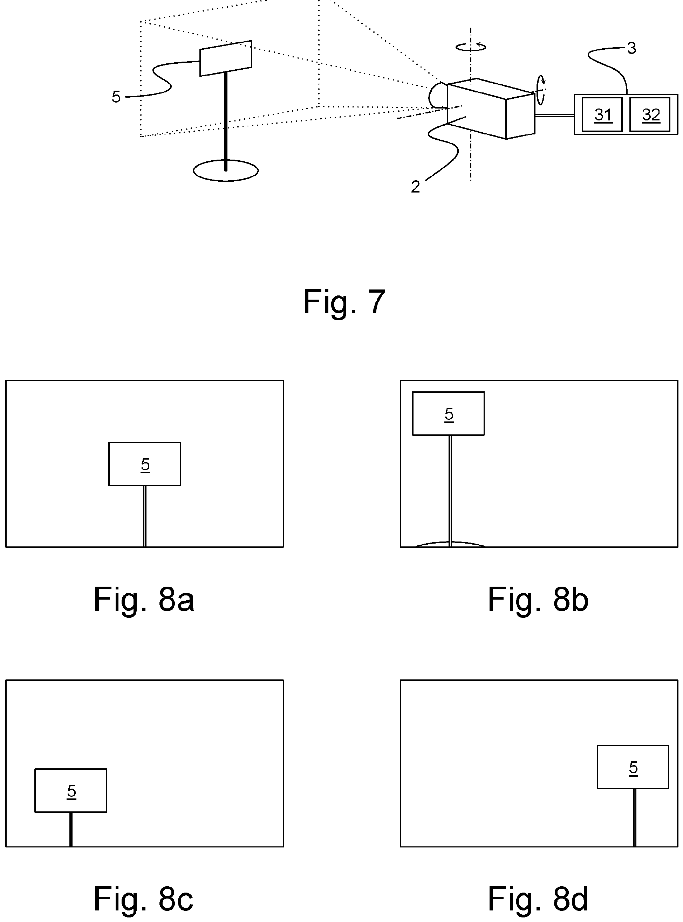

The vignetting model may be provided by the manufacturer of the lens system and/or the camera 2, or it may be established for a given camera 2. Fig. 7 shows a setup for the creation of a vignetting model of the camera 2. The camera 2 is pointed towards a visual reference target 5, that is constituted by a limited area of uniform color. Preferably, the visual reference target 5 is a regular surface of uniform color, for example a white or green rectangle.

The camera 2 is mounted to be freely pivotable, as indicated by the three principal pivoting axes in Fig. 7. The camera 2 is then pivoted to different orientations and used to capture a plurality of images in which the visual reference target 5 appears in different areas of the field of view of the camera 2. This is schematically illustrated in Fig. 8a-d which show exemplary images, in which the visual reference image 5 is contained in different positions of the image.

In order to establish a vignetting model of the camera 2, an image position of the visual reference target 5 is determined in each of the images. As an example, the geometrical center of the visual reference target in each of the images is determined as image position of the visual reference target 5. Furthermore, a brightness or saturation value of the visual reference target 5 is determined in each image, for example by averaging the brightness or saturation values of the entire area of the visual reference target 5 in each image. Subsequently, a vignetting model of the camera 2 is established based on the determined brightness or saturation values and the image positions of the visual reference target 5 in the captured images.

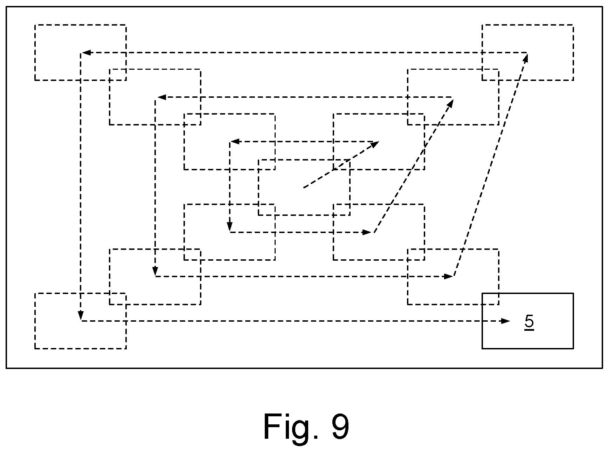

The position of the visual reference target 5 in the images can be varied systematically in order to improve the quality of the obtained vignetting model. This is schematically illustrated in Fig. 9. The camera 2 is first oriented such that the visual reference target 5 appears in the center of the image frame. Subsequently, an operator of the camera 2 is notified at which position in the field of view of the camera 2 the visual reference target 5 is to be placed. The operator moves the camera 2 accordingly, preferably by rotation around its viewpoint, to position the visual reference target 5 at the notified position in the field of view of the camera 2 before each of the plurality of images is captured. Thus, a sequence of images for the calculation of the vignetting model is systematically established.

For each image, the position of the visual reference target 5 and its brightness or saturation in the respective image are determined. The position of the visual reference target 5 in each image is preferably indicated by the distance from the image center. The vignetting model can then be established by interpolation between the associated value pairs of distance from the image center and corresponding brightness or saturation value.

### List of reference signs

- 1: region of interest
- 11: object of interest (LED wall)
- 12: person
- 2: camera
- 21: tracking system
- 3: image processing system
- 31: processing unit
- 32: modelling unit
- 4: augmenting area
- 41: background element (green screen)
- 5: visual reference target
- pₓ: image (frame) position
- dₓ: distance from image center
- c: image (frame) center

## Claims

1. Method, preferably computer-implemented method, for creating digitally augmented camera images based on input images captured by a camera (2), the method comprising:
f) providing a vignetting model for the camera (2);
g) capturing at least one input image with the camera (2);
h) determining augmenting areas (4) in the input image which are to be digitally augmented;
i) providing virtual content image data at least for the augmenting areas (4); and
j) generating a digitally augmented output image by augmenting the input image with virtual content image data at least in the augmenting areas (4);
**characterized in that**
the determining of the augmenting areas (4) and/or the providing of the virtual content image data is based on the vignetting model of the camera (2).

2. Method according to claim 1, wherein the step of determining the augmenting areas (4) in the input image comprises correcting the input image based on the vignetting model, and/or wherein the method comprises a step of applying a devignetting effect based on the vignetting model to the input image, preferably at least to areas of the input image that are outside the augmenting areas (4).

3. Method according to claim 2, wherein determining the augmenting areas (4) in the input image comprises chroma keying, and wherein preferably the step of correcting the input image based on the vignetting model is carried out before determining the augmenting areas (4) in the input image.

4. Method according to any of the preceding claims, wherein determining the augmenting areas (4) comprises
• providing a 3D model of a background element (41) such as a green screen that is captured in the input image;
• capturing a plurality of reference images of the background element (41) with the camera (2) from a plurality of camera positons and/or camera poses;
• correcting the reference images based on the vignetting model to obtain devignetted reference images;
• assigning color information of the devignetted reference images to the 3D model of the background element (41) to obtain a 3D reference model of the background element;
• determining areas in the input image in which the background element (41) is captured as augmenting areas (4) based on a comparison of the input image to the 3D reference model of the background element (41).

5. Method according to any of the preceding claims, in particular claim 1, wherein the vignetting model is used in the step of creating virtual content image data by applying a vignetting effect to the virtual content image data based on the vignetting model.

6. Method according to any of the preceding claims, in particular claim 5, wherein determining the augmenting areas (4) comprises
• providing a 3D model of an object of interest (11) that is captured in the input image;
• establishing a position and pose of the camera (2);
• calculating the image position of the object of interest (11) in the input image based on the 3D model of the object of interest (11) and the established position and pose of the camera (2);
• determining the augmenting areas (4) based on the image position of the object of interest (11) in the input image.

7. Method according to any of the preceding claims, wherein the vignetting model comprises a function mapping a vignetting value indicative of a reduction in brightness and/or saturation due to the vignetting effect of the camera (2) to each pixel position of an image frame of the camera (2).

8. Method according to any of the preceding claims, wherein the vignetting model comprises a function mapping a vignetting value indicative of a reduction in brightness and/or saturation due to the vignetting effect of the camera (2) to a distance relative to a center of an image frame of the camera (2).

9. Method according to claim 8, wherein the center of the image frame of the camera (2) comprises an offset value indicating an offset between the geometrical center of the image frame of the camera (2) and a center of the vignetting model at which the vignetting value has a minimum or maximum value.

10. Digital image processing system (3) for creating digitally augmented camera images based on input images captured by a camera (2), preferably by using a method according to any of the preceding claims, the digital processing system comprising:
• a processing unit (31) that is configured to
∘ receive an input image from a camera (2);
∘ determine augmenting areas (4) in the input image which are to be digitally augmented;
∘ provide virtual content image data at least for the augmenting areas (4); and
∘ generate a digitally augmented output image by augmenting the input image with virtual content image data at least in the augmenting areas (4);
and
• a modelling unit (32) that is configured to
∘ store a vignetting model of the camera (2); and
∘ provide the vignetting model to the processing unit (31);
wherein the processing unit (31) is configured to determine the augmenting areas (4) and/or provide the virtual content image data based on the vignetting model of the camera (2).

11. Digital image processing system (3) according to claim 10, wherein the processing unit (31) is configured to correct the input image based on the vignetting model when determining the augmenting areas (4) in the input image.

12. Digital image processing system (3) according to claim 11, wherein the processing unit (31) is configured to use chroma keying when determining the augmenting areas (4) in the input image, and is preferably configured to correct the input image based on the vignetting model before determining the augmenting areas (4) in the input image.

13. Digital image processing system (3) according to any of claims 10 to 12, wherein the processing unit (31) is configured to
• provide a 3D model of a background element such as a green screen that is captured in the input image;
• receive a plurality of reference images of the background element captured the camera (2) from a plurality of camera positions and/or camera poses;
• correct the reference images based on the vignetting model to obtain devignetted reference images;
• assign color information of the devignetted reference images to the 3D model of the background element to obtain a 3D reference model of the background element;
• compare the corrected input image to the 3D reference model of the background element in order to determine areas in the input image in which the background element is captured as augmenting areas (4).

14. Digital image processing system (3) according to any of claims 10 to 13, wherein the processing unit (31) is configured to use the vignetting model for creating virtual content image data by applying a vignetting effect to the virtual content image data based on the vignetting model.

15. Digital image processing system (3) according to any of the claims 10 to 14, in particular claim 14, wherein the processing unit (31) is configured to
• provide a 3D model of an object of interest that is captured in the input image;
• establish a position and pose of the camera (2);
• calculate the image position of the object of interest in the input image based on the 3D model of the object of interest and the established position and pose of the camera (2);
• determine the augmenting areas (4) based on the image position of the object of interest in the input image.
